# EUROPEAN PATENT APPLICATION

(11) **EP 4 707 878 A2**
(43) Date of publication of application: **11.03.2026**
(21) Application number: 25199817.5
(22) Date of filing: 03.09.2025
(51) Int. Cl.: G02B 1/14

(54) **METHOD OF MANUFACTURING COVER FILM, COVER FILM MANUFACTURED THEREBY, ELECTRONIC DEVICE INCLUDING COVER FILM**

(30) Priority: 06.09.2024 KR 20240121367; 19.02.2025 KR 20250021628
(71) Applicant: Samsung Display Co., Ltd., Yongin-si, Gyeonggi-do 17113 (KR)
(72) Inventor: Chae, Jaehyun, 17113 Yongin-si, Gyeonggi-do, (KR); Choi, Kwang-Wook, 17113 Yongin-si, Gyeonggi-do (KR)
(74) Representative: Gulde & Partner

(57) **Abstract**

A method of manufacturing a cover film (CLA) includes: sequentially arranging, on a protective film (PF) that is parallel to a plane defined by a first direction (DR1) and a second direction (DR2), an adhesive layer (AL) and a first release paper in a third direction (DR3) intersecting the first direction (DR1) and the second direction (DR2), kiss-cutting a portion (RP1, RP2) of the first release paper along a first cutting line (CL1), arranging a second release paper on the adhesive layer (AL) exposed by removing the portion (RP1, RP2) of the first release paper, and full-cutting the protective film (PF) and the adhesive layer (AL) in an outer edge shape (ED) of a protection target (DD) along a third cutting line (CL3) spaced apart from the first cutting line (CL1).

## Description

### BACKGROUND

### 1. Field

One or more embodiments relate to a cover film. For example, the disclosure relates to a cover film for protecting the cover glass, a method of manufacturing the cover film, and an electronic device including the cover film.

### 2. Description of the Related Art

Cover films can be introduced into (e.g., applied to) the surface or interior of various protected objects. The protected objects can take many forms, including finished products, consumer-ready products, and/or after-market products.

The cover film may be attached to the surface or the internal parts of the protected object. This attachment can prevent or reduce damage to the protected object from various environmental conditions. For example, the metal contained in the protected object may be corroded by water, moisture, and/or the like, causing malfunctions in the protected object. Additionally, physical impacts can cause defects such as cracks on the protected object.

### SUMMARY

Aspects of one or more embodiments are directed toward a cover film with enhanced or improved reliability.

Aspects of one or more embodiments are directed toward a method of the manufacture of the cover film.

Aspects of one or more embodiments are directed toward a method for the manufacturing of an electronic device including the cover film.

Additional aspects of one or more embodiments of the disclosure will be set forth in the description which follows, and in part will be apparent from the description, or may be learned by practice of the present disclosure. The invention is defined by the appended set of claims. The description that follows is subjected to this limitation. Any disclosure lying outside the scope of said claims is only intended for illustrative as well as comparative purposes.
A method of manufacturing a cover film according to one or more embodiments of the disclosure includes: sequentially arranging, on a protective film that is parallel to a plane defined by a first direction and a second direction crossing the first direction, an adhesive layer and a first release liner in a third direction crossing the first direction and the second direction, kiss-cutting a portion of the first release liner along a first cutting line and removing the portion of the first release liner along the first cutting line to expose a portion of the adhesive layer, arranging a second release liner on the portion of the adhesive layer, and full-cutting the protective film and the adhesive layer in an outer edge shape of a protection target along a third cutting line spaced and/or apart (e.g., spaced apart or separated) from the first cutting line. For example, the method involves sequentially arranging the adhesive layer and the first release liner on the protective film that is parallel to a plane defined by the first direction and the second direction crossing the first direction. This arrangement is done in the third direction that crosses both the first and second directions. The method includes kiss-cutting a portion of the first release liner along the first cutting line and removing this portion to expose part of the adhesive layer. The second release liner is then arranged on the exposed adhesive layer. Finally, the protective film and adhesive layer are full-cut in the outer edge shape of the protection target along the third cutting line that is spaced from the first cutting line. This method is used for manufacturing the cover film. In one or more embodiments, arranging on a protective film may include arranging directly on a protective film.

In one or more embodiments, after the full-cutting of the protective film and the adhesive layer along the third cutting line, in a plan view, the cover film may include a protective part overlapping the outer edge shape of the protection target, a pull-tab part protruding from at least one side of the protective part, and a stress concentration part, and the stress concentration part may be a part in which the protective part and the pull-tab part are connected to each other, and peeling stress may be concentrated if (e.g., when) the first release liner is peeled off from the protective film. A technical advantage is that the method identifies the specific region where peeling stress is concentrated, which is the critical area that the invention's method of spaced-apart cutting is designed to protect from damage.

In one or more embodiments, the first cutting line may be spaced and/or apart (e.g., spaced apart or separated) from the stress concentration part. A technical effect of this spacing is the prevention or minimization of weakening of the film's tensile strength at its most vulnerable point, thereby improving reliability and preventing the film from tearing when the release liner is peeled off.

In one or more embodiments, after the arranging of the second release liner on the portion of the adhesive layer, the method may further include: kiss-cutting a portion of the second release liner along a second cutting line. A technical advantage lies in enabling the creation of a strong, multi-part pull-tab assembly. In one or more embodiments, arranging a second release liner on the portion of the adhesive layer includes arranging a second release liner directly on the portion of the adhesive layer.

In one or more embodiments, the second cutting line may be spaced and/or apart (e.g., spaced apart or separated) from both (e.g., simultaneously) the first cutting line and the third cutting line. A technical advantage is twofold: spacing the grooves from each other prevents the pull-tab part from tearing, and spacing them from the final edge of the film further prevents weakening of the tensile strength, enhancing the overall durability of the film during application.

In one or more embodiments, the second cutting line may be spaced and/or apart (e.g., spaced apart or separated) from the first cutting line by an amount that is greater than a processing tolerance. By setting a gap larger than this tolerance, a technical advantage is an improvement in the stability and accuracy of the manufacturing process, which reduces the likelihood of incorrect cuts or failed cuts, thereby increasing production efficiency and the reliability of the final product.

In one or more embodiments, after the kiss-cutting of the portion of the first release liner, a first groove may be formed in the third direction on the protective film, after the kiss-cutting of the portion of the second release liner, a second groove may be formed in the third direction on the protective film, and, in a cross-sectional view, the first groove and the second groove may be spaced and/or apart (e.g., spaced apart or separated) from each other. For example, after the kiss-cutting of the first release paper liner, the first groove is formed in the third direction on the protective film. Similarly, after the kiss-cutting of the second release paper liner, the second groove is formed in the third direction. In the cross-sectional view, the first and second grooves are spaced from each other. A technical advantage is that this specific structure prevents or reduces the tearing of the pull-tab part when the release liner is peeled off.

In one or more embodiments, after the full-cutting of the protective film and the adhesive layer along the third cutting line, in a plan view, the cover film may include a protective part overlapping the outer edge shape of the protection target and a pull-tab part protruding from at least one side of the protective part, and the first cutting line may be spaced and/or apart (e.g., spaced apart or separated) from the protective part while overlapping the pull-tab part. For example, after the full-cutting of the protective film and the adhesive layer along the third cutting line, when viewed in the plan view, the cover film includes the protective part overlapping the outer edge shape of the protection target and the pull-tab part protruding from at least one side of the protective part. The first cutting line is spaced from the protective part while overlapping the pull-tab part. A technical advantage of this placement is that it creates the necessary peeling feature on the tab without compromising the strength of the critical stress concentration part where the tab joins the main body of the film.

In one or more embodiments, after the full-cutting of the protective film and the adhesive layer along the third cutting line, in a plan view, the cover film may include a protective part overlapping the outer edge shape of the protection target and a pull-tab part protruding from at least one side of the protective part, and a portion of the first cutting line may overlap the protective part. A technical effect is that even with this design, the film's reliability is maintained because the cutting line is still kept spaced from the critical stress concentration part, which prevents the weakening of tensile strength.

In one or more embodiments, the first release liner and the second release liner may be in different colors. A technical advantage is that it enhances the distinction between the two liners. This aids in correct visual or automated identification during the manufacturing process, which can prevent errors, improve efficiency, and ensure the correct component is handled at the correct time.

In one or more embodiments, the kiss-cutting may be performed by a punching process. A technical advantage is that this process creates a groove with a smooth surface, unlike other methods like laser cutting which can leave uneven surfaces or carbonized foreign substances. A smooth groove provides superior structural integrity and makes the film less likely to tear, thus enhancing its reliability.

A cover film according to one or more embodiments of the disclosure includes: a first release liner having a surface that is parallel to a plane defined by a first direction and a second direction crossing the first direction, an adhesive layer on the first release liner, and a protective film on the adhesive layer, and including a first groove and a second groove, which are formed in a thickness direction that is parallel to a third direction crossing the first direction and the second direction, the first groove and the second groove are spaced and/or apart (e.g., spaced apart or separated) from each other, and may be surface deformations generated by a manufacturing process. For example, the cover film includes the first release paper liner with a surface parallel to a plane defined by the first direction and the second direction crossing the first direction. The adhesive layer is disposed on the first release paper liner, and the protective film is disposed on the adhesive layer. The protective film includes the first groove and the second groove, both extending in a thickness direction parallel to the third direction intersecting the first and second directions. The first and second grooves are spaced apart from each other and are characteristic surface deformations. In one or more embodiments, the adhesive layer may be directly on the first release liner. In one or more embodiments, the protective film may be directly on the adhesive layer.

In one or more embodiments, in a plan view, the cover film may include a protective part overlapping an outer edge shape of a protection target, a pull-tab part protruding from at least one side of the protective part, and a stress concentration part, the stress concentration part may be a part in which the protective part and the pull-tab part are connected to each other, and peeling stress is concentrated if (e.g., when) the first release liner is peeled off from the protective film, and the first groove may be spaced and/or apart (e.g., spaced apart or separated) from the stress concentration part. A technical advantage of this structure is improved reliability and durability, as it prevents the combination of a geometric stress point with a process-induced weak point (the groove), making the film significantly less prone to tearing during application.

In one or more embodiments, in a cross-sectional view, each of the first groove and the second groove may have a pointed shape in a direction away from the adhesive layer.

In one or more embodiments, in the cross-sectional view, each of the first groove and the second groove may have a smooth surface. A smooth groove minimizes stress raisers that could initiate a tear, making the film more durable compared to a film with rough or uneven grooves that might be created by other processes like laser cutting.

An electronic device according to one or more embodiments of the disclosure includes: a protection target, and a cover film on the protection target, the cover film including a protective film on the protection target, and including a first groove and a second groove, which are formed in a thickness direction, the first groove and the second groove are spaced and/or apart (e.g., spaced apart or separated) from each other, and are surface deformations generated by a manufacturing process, and an adhesive layer for adhering the protective film to the protection target. For example, the electronic device includes the protection target and the cover film on the protection target. The cover film includes the protective film disposed on the protection target, with the protective film comprising the first groove and the second groove. Both grooves extend in a thickness direction parallel to the third direction crossing the first and second directions. The first and second grooves are spaced from each other and are characteristic surface deformations. Additionally, the cover film includes the adhesive layer that allows the protective film to adhere to the protection target.

In one or more embodiments, the cover film may further include a first release liner on the adhesive layer, which is peeled off before adhering the cover film to the protection target, in a plan view, the cover film may include a protective part overlapping an outer edge shape of the protection target, a pull-tab part protruding from at least one side of the protective part, and a stress concentration part, the stress concentration part may be a part in which the protective part and the pull-tab part are connected to each other, and peeling stress may be concentrated if (e.g., when) the first release liner is peeled off from the adhesive layer, and the first groove may be spaced and/or apart (e.g., spaced apart or separated) from the stress concentration part. A technical advantage of this structure is improved reliability and durability, as it prevents the combination of a geometric stress point with a process-induced weak point (the groove), making the film significantly less prone to tearing during application. In one or more embodiments, the first release liner is directly on the adhesive layer.

In one or more embodiments, in a cross-sectional view , each of the first groove and the second groove may have a pointed shape in a direction away from the adhesive layer.

In one or more embodiments, in the cross-sectional view , each of the first groove and the second groove may have a smooth surface. A smooth groove minimizes stress raisers that could initiate a tear, making the film more durable compared to a film with rough or uneven grooves that might be created by other processes like laser cutting.

In one or more embodiments, the protection target includes: a display module including a plurality of pixels, and an exterior case for accommodating the display module, and the protection target may be selected from among an electronic device for displaying an image, a wearable electronic device, and an electronic device for a vehicle, each including the display module. A technical advantage is the application of the reliable, defect-resistant cover film to these specific high-value products, ensuring their displays are protected effectively without issues caused by film tearing during assembly.

The cover film according to one or more embodiments of the disclosure may prevent or minimize or reduce stress concentration by kiss-cutting the liner (first release liner) at a distance from the outer edge shape of the protection target. Accordingly, the cover film with improved reliability may be provided.

In addition, the cover film may be formed by kiss-cutting the blocker (second release liner) at a distance from the kiss-cut position of the liner. Accordingly, by preventing or reducing the overlap of the cutting line by the kiss cut, a more reliable cover film may be provided.

In addition, the kiss-cut position of the blocker may be designed by taking into account a machining tolerance. Accordingly, it is possible to prevent or minimize or reduce the blocker from being cut or being cut in a wrong place.

In addition, the cover film does not need to replace the liner and the cost may be reduced.

For example, the cover film of the disclosure may prevent or reduce stress concentration by kiss-cutting the liner (first release paper liner) at a distance from the outer edge shape of the protection target. This technique ensures that the stress is not concentrated at the edges, which can lead to potential damage or failure. By strategically placing the kiss-cut away from the critical areas, the cover film's reliability is significantly enhanced, providing better protection for the underlying object.

In addition, the cover film may be formed by kiss-cutting the blocker (second release paper liner) at a distance from the kiss-cut position of the liner. This method prevents or protects from the overlap of the cutting lines, which can weaken the structure of the cover film. By maintaining a clear separation between the cuts, the integrity of the cover film is preserved, resulting in a more durable and reliable product. This approach also takes into account machining tolerances, ensuring that the cuts are precise and do not inadvertently damage the blocker.

Furthermore, the kiss-cut position of the blocker is designed with machining tolerance in mind. This consideration helps to prevent the blocker from being cut incorrectly or in an unintended location, which could compromise the cover film's effectiveness. By carefully planning the kiss-cut positions, the manufacturing process becomes more efficient, reducing the likelihood of errors and improving the overall quality of the cover film.

Additionally, the cover film does not require the replacement of the liner, which can lead to cost savings. By enhancing the manufacturing process and reducing material waste, the production of the cover film becomes more economical. This cost-effective approach benefits both manufacturers and consumers, making high-quality protective films more accessible.

It is to be understood that both the foregoing general description and the following detailed description are explanatory and are intended to provide further explanation of present disclosure, the scope of which is defined by the appended claims, and equivalents thereof.

### BRIEF DESCRIPTION OF THE DRAWINGS

The accompanying drawings, which are included to provide a further understanding of the present disclosure and are incorporated in and constitute a part of this specification, illustrate embodiments of the present disclosure, and together with the description serve to explain the present disclosure.
FIG. 1 is a block diagram illustrating an electronic device according to one or more embodiments.
FIG. 2 is a schematic diagram of an electronic device according to one or more embodiments.
FIG. 3 is a schematic illustration of a display device according to one or more embodiments of the disclosure
FIG. 4 is an exploded view for describing a display device according to one or more embodiments of the disclosure.
FIG. 5 is a perspective view for describing a stacking structure of a preliminary film.
FIG. 6 is a sectional view showing a state in which an adhesive layer AL is omitted from the preliminary film of FIG. 5.
FIGS. 7 and 8 are perspective views showing a cover film according to one or more embodiments of the disclosure.
FIG. 9 is a plan view showing a cover film according to one or more embodiments of the disclosure.
FIG. 10 is a sectional view taken along the line I-I' of FIG. 9.
FIG. 11 is a plan view showing a cover film according to one or more embodiments of the disclosure.
FIG. 12 is a sectional view taken along the line II-II' of FIG. 11.
FIG. 13 is a plan view showing a cover film according to one or more embodiments of the disclosure.
FIG. 14 is a sectional view taken along the line III-III' of FIG. 13.
FIG. 15 is a plan view showing a final shape of the cover film according to one or more embodiments of the disclosure.
FIG. 16 is a sectional view taken along the line IV-IV' of FIG. 15.
FIG. 17 is an enlarged plan view for describing the area A of FIG. 15.
FIG. 18 is an enlarged plan view showing a cover film CF' according to a comparative example corresponding to the portion A of FIG. 17.
FIG. 19 is a sectional view taken along the line V-V' of FIG. 18.
FIG. 20 is a perspective view for describing a cover film according to one or more embodiments of the disclosure.
FIG. 21 is an enlarged plan view showing the portion B of FIG. 20.
FIGS. 22, 23, 24, and 25 are views for describing a method of manufacturing the cover film of FIG. 20.

### DETAILED DESCRIPTION

Hereinafter, embodiments of the disclosure will be described in more detail with reference to the accompanying drawings. Same reference numerals will be used for the same components in the drawings, and repeated descriptions of the same components will not be provided.

The display device according to one or more embodiments may be applied to a variety of electronic devices. The electronic apparatus according to one or more embodiments includes the aforementioned display device and may include a module or apparatus having other additional functions in addition to the display device.

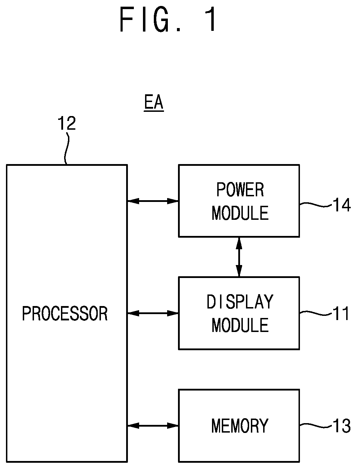

FIG. 1 is a block diagram illustrating an electronic device according to one or more embodiments.

Referring to FIG. 1, an electronic device EA according to one or more embodiments may include a display module 11, a processor 12, a memory 13, and a power module 14.

The processor 12 may include a central processing unit ("CPU"), an application processor ("AP"), a graphic processing unit ("GPU"), a communication processor ("CP"), an image signal processor ("ISP"), and/or a controller.

Data information necessary for operation of the processor 12 or the display module 11 may be stored in the memory 13. When the processor 12 executes an application stored in the memory 13, an image data signal and/or an input control signal is transmitted to the display module 11, and the display module 11 may process received signal and output image information through a display screen.

The power module 14 may include a power supply module such as a power adapter and/or a battery device, and a power conversion module that converts power supplied by the power supply module to generate power desired or required for operation of the electronic device EA.

At least one of the components of the electronic device EA described above may be included in the display device according to the above-described embodiments. In addition, some of individual modules functionally included in one module may be included in the display device, and others may be provided separately from the display device. For example, the display device may include the display module 11, and the processor 12, the memory 13, and the power module 14 may be provided in the form of another device in the electronic device EA other than the display device.

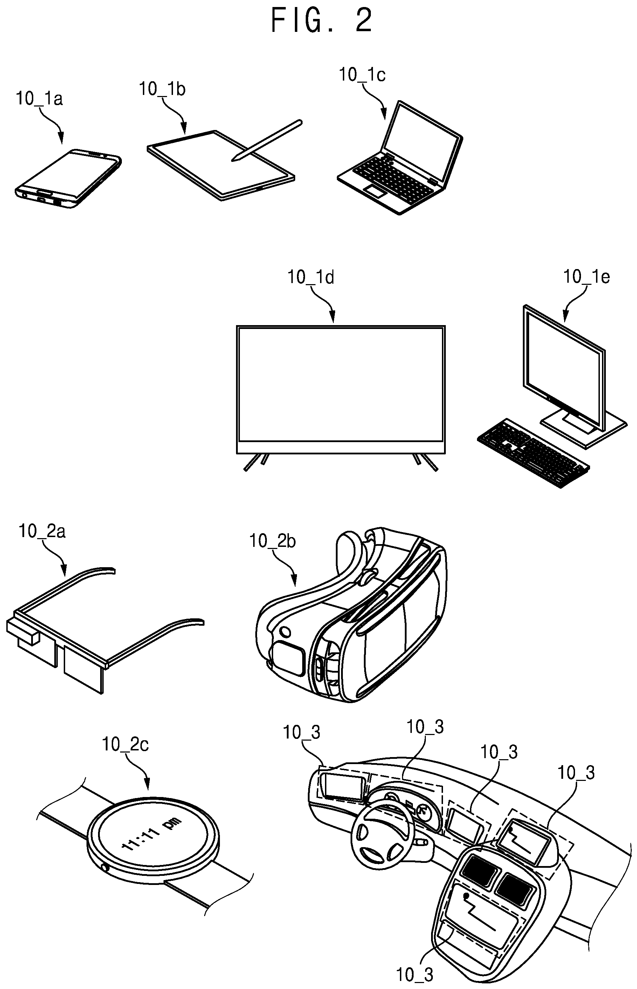

FIG. 2 is a schematic diagram of an electronic device according to one or more embodiments.

Referring to FIG. 2, one or more suitable electronic devices to which display devices according to one or more embodiments are applied may include not only electronic devices for image display such as a smartphone 10_1a, a tablet PC 10_1b, a laptop 10_1c, a TV 10_1d, a desk monitor 10_1e, and/or the like, but wearable electronic devices including display modules such as a smart glass 10_2a, a head mounted display 10_2b, a smart watch 10_2c, and/or the like, vehicle electronic device 10_3 including display modules such as on a vehicle's instrument panel, a center fascia, a center information display ("CID") located on a dashboard, a room mirror display, and/or the like.

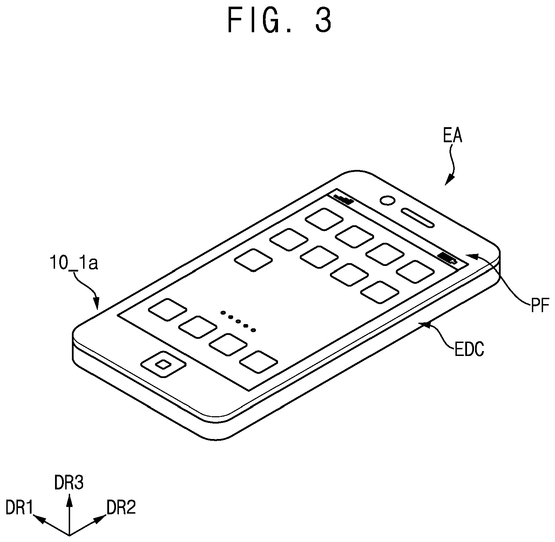

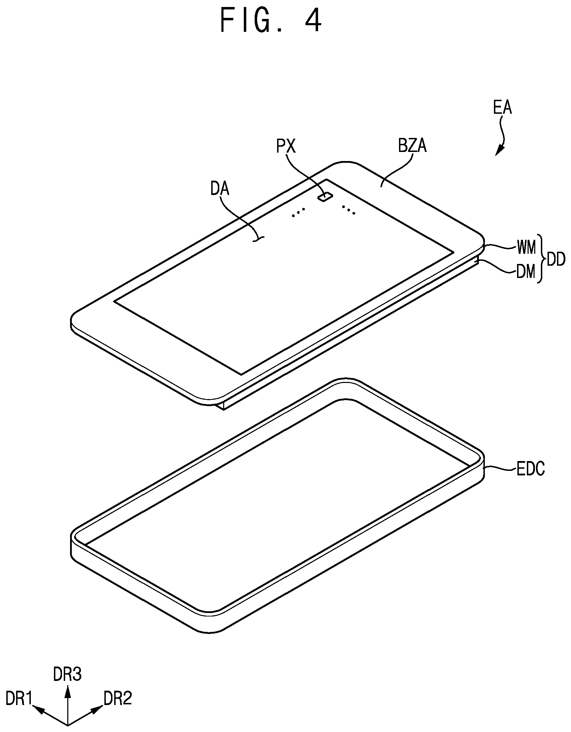

FIGS. 3 and 4 are views for describing a display device according to one or more embodiments of the disclosure.

Referring to FIGS. 3 and 4, according to one or more embodiments, an electronic device EA may include an exterior case EDC. A seating groove may be defined (e.g., formed) in the exterior case EDC. A protection target (e.g., a display device DD) may be accommodated in a space defined by the seating groove (e.g., inside the case EDC). For example, the protection target may be a display device DD including a display module DM. The protection target may be one or more suitable electronic devices including a display device DD. Although the display device 10_1a has been illustrated in FIG. 3, the disclosure is not limited thereto. As described above, the electronic device EA may be implemented in one or more suitable forms.

According to one or more embodiments, a protective film PF may adhere onto the protection target. According to one or more embodiments, a cover film from which a release paper is removed may include a protective film PF arranged on the protection target, and an adhesive layer for allowing the protective film PF to adhere to the protection target. As will be described in more detail below, the protective film PF may include a first groove and a second groove, which are formed in a thickness direction, are spaced and/or apart (e.g., spaced apart or separated) from each other, and are surface deformations generated by a manufacturing process.

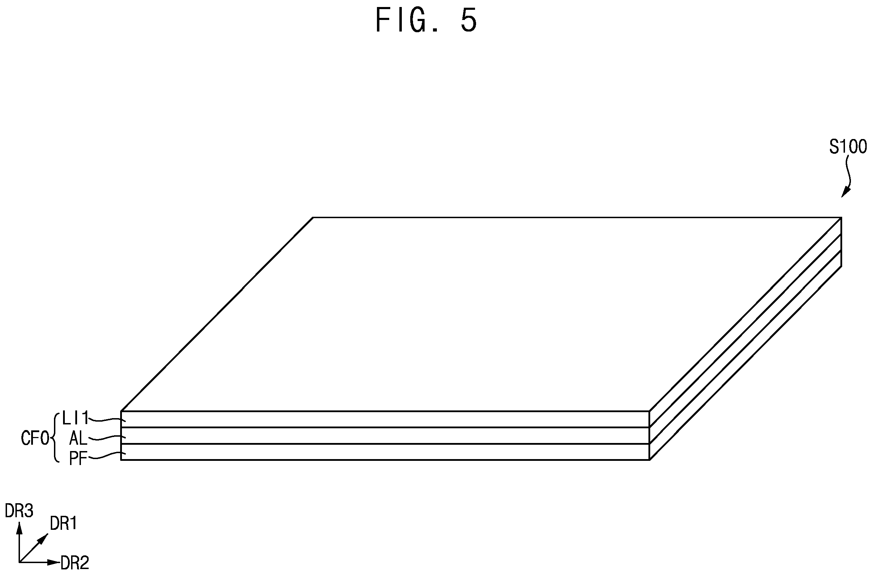

The cover film will be described in more detail with reference to FIG. 5 and the drawings following FIG. 5.

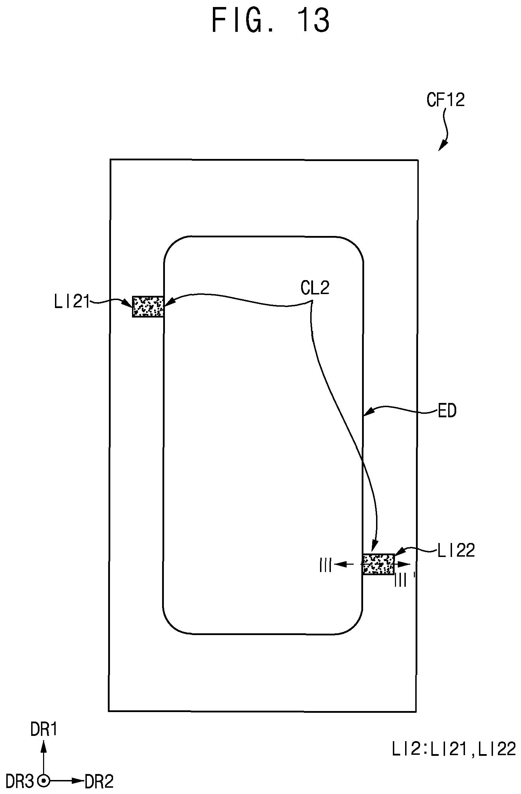

The protective film PF may include a protective part overlapping an outer edge shape of the protection target (e.g., see ED of FIG. 13). For example, the display device DD may include a window module WM and a display module DM.

The display module DM may include a display area DA and a peripheral area BZA.

A plurality of pixels PX may be arranged in the display area DA. A front surface may refer to a surface on which an image is displayed by light emitted from the pixels PX. The front surface may be defined by a first direction DR1 and a second direction DR2. A rear surface may be closer to the exterior case EDC than the front surface. The front surface and the rear surface may be spaced and/or apart (e.g., spaced apart or separated) from each other in a third direction DR3.

Hereinafter, for convenience of description, the third direction DR3 will also be referred to as a thickness direction. For example, the first direction DR1, the second direction DR2, and the third direction DR3 may intersect each other. For example, the first direction DR1, the second direction DR2, and the third direction DR3 may be normal (e.g., perpendicular) to each other.

However, the disclosure is not limited thereto. For example, the image may also be displayed on the rear surface. In this case, the exterior case EDC may be formed of a transparent material.

The peripheral area BZA may be around (e.g., surround) the display area DA. For example, a shape of the display area DA may be substantially defined by the peripheral area BZA.

The window module WM may include a plurality of layers. For example, the window module WM may include a substrate, a light blocking pattern, a window protection layer, an adhesive layer, and/or the like.

For example, the substrate may include a material having high light transmittance. For example, the substrate may include glass.

The window protection layer may be arranged on the substrate. The adhesive layer may be arranged between the window protection layer and the substrate. The adhesive layer may allow the window protection layer to adhere to the substrate.

The light blocking pattern may be arranged under the substrate. The light blocking pattern may include a dye, a pigment, and/or the like. The light blocking pattern may be formed by a coating scheme (e.g., method). The light blocking pattern may overlap the peripheral area BZA. However, the disclosure is not limited thereto. For example, the light blocking pattern may include other materials. In addition, the light blocking pattern may be formed in (e.g., using) other suitable schemes (methods). The light blocking pattern may overlap a portion of the display area DA. In addition, the light blocking pattern may be arranged on the substrate.

The window module WM may minimize or reduce stress applied to the display module DM. In addition, the window module WM may prevent or substantially prevent external moisture and/or the like from penetrating into the display module DM.

The descriptions of the display device and the electronic device have been provided for illustrative purposes. The protection target to which the cover film adheres may be a display device and/or one or more suitable electronic devices including the display device.

Hereinafter, a method of forming the cover film including the adhesive layer and the window protection layer included in the window module WM, the cover film, and an electronic device including the cover film will be mainly described.

FIGS. 5, 6, 7, 8, 9, 10, 11, 12, 13, 14, 15, 16, and 17 are views for describing a method of manufacturing a cover film according to one or more embodiments of the disclosure.

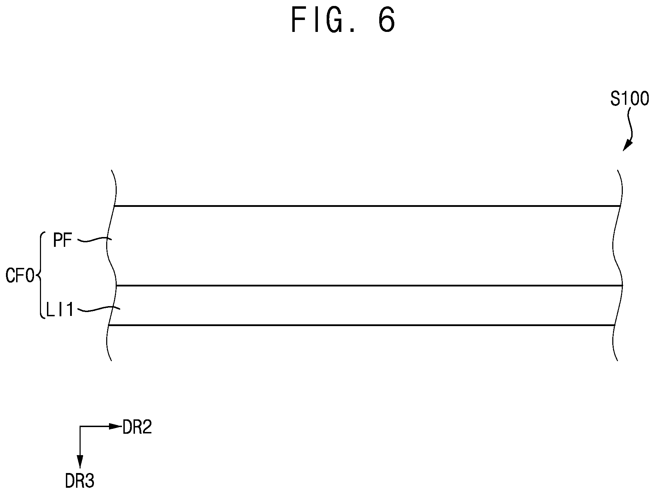

Referring to FIGS. 5 and 6, according to one or more embodiments, a preliminary film CF0 may be formed by sequentially arranging an adhesive layer AL and a first release paper (e.g., release liner or release film) LI1 on a protective film PF (S100).

For example, FIG. 5 is a perspective view for describing a stacking structure of a preliminary film CF0, and FIG. 6 is a sectional view showing a state in which an adhesive layer AL is omitted from the preliminary film CF0 of FIG. 5. For convenience of description, the adhesive layer AL may also not be provided in the following sectional views.

According to one or more embodiments, the protective film PF, the adhesive layer AL, and the first release paper LI1 may be parallel to a plane defined by the first direction DR1 and the second direction DR2. The protective film PF, the adhesive layer AL, and the first release paper LI1 may be sequentially arranged in the third direction DR3.

According to one or more embodiments, the protective film PF may be arranged on the protection target. According to one or more embodiments, the protective film PF may include transparent glass or plastic. For example, the protective film PF may include ultra-thin tempered glass ("UTG"), polyethylene terephthalate ("PET"), polyimide ("PI"), polyethersulfone ("PS"), polyacrylate ("PAR"), polyetherimide ("PEI"), polyethylene naphthalate ("PEN"), polyphenylene sulfide ("PPS"), polyacrylate, polycarbonate ("PC"), polyarylene ethersulfone, and/or the like. However, the disclosure is not limited thereto. For example, the protective film PF may include a variety of suitable materials, including thermoplastics, curing (e.g., curable or cured) materials (e.g., thermosets, room-temperature curables, radio-hardenable (e.g., radiation curable or cured) materials, and/or the like). In addition, for example, the PET included in the protective film PF may be recycled material.

The adhesive layer AL may allow the first release paper LI1 to adhere to the protective film PF. After the first release paper LI1 is removed, the adhesive layer AL may allow the protective film PF to adhere to the protection target. According to one or more embodiments, the adhesive layer AL may include an adhesive material. For example, the adhesive layer AL may include an optically clear adhesive ("OCA"), optically clear adhesive resin ("OCR"), pressure sensitive adhesive ("PSA"), and/or the like. For example, the adhesive layer AL may include an adhesive composition, light initiators, hardeners, other additives, and/or the like. However, the disclosure is not limited thereto.

According to one or more embodiments, the first release paper LI1 may be removed (peeled) before the protective film PF adheres to the protection target. For example, the first release paper LI1 may include a material formed by performing a release treatment on one surface of a plastic film. For example, a release agent used for the release treatment may include an alkyd-based release agent, a silicone-based release agent, a fluorine-based release agent, an unsaturated ester-based release agent, a polyolefin-based release agent, a wax-based release agent, and/or the like. However, the disclosure is not limited thereto.

For example, the protection target may be a glass-type (kind) window module WM applied to a panel and/or the like of a display device of a mobile phone, a tablet PC, and/or the like. However, the disclosure is not limited thereto. For example, the protection target may be a window module WM including tempered glass, ultra-thin tempered glass ("UTG"), polyethylene terephthalate ("PET"), hard-coated PET, non-hard-coated PET, recycled PET, polyimide ("PI"), polyethersulfone ("PS"), polyacrylate ("PAR"), polyetherimide ("PEI"), polyethylene naphthalate ("PEN"), polyphenylene sulfide ("PPS"), polyayllate, polycarbonate ("PC"), polyarylene ethersulfone, thermoplastics, curing materials, and/or the like. For example, the preliminary film CF0 of FIGS. 5 and 6 may be illustrative (e.g., shown as an example). The preliminary film CF0 may include two or more of the various suitable layers, or some of the above components may not be provided/substituted. For example, the preliminary film CF0 may include a variety of additional layers, such as a water-repellent coating layer, an anti-static layer, and a hard coating layer (anti-fingerprint, anti-shock, and/or the like).

In addition, although FIG. 5 shows one protective film PF, one adhesive layer AL, and one first release paper LI1, the disclosure is not limited thereto. For example, the protective film PF, the adhesive layer AL, and/or the first release paper LI1 may include multi-layers. For example, a cover film CF may have a structure in which the protective film PF and the adhesive layer AL are alternately stacked in multiple layers. In one or more embodiments, an additional release paper may be arranged on the first release paper LI1.

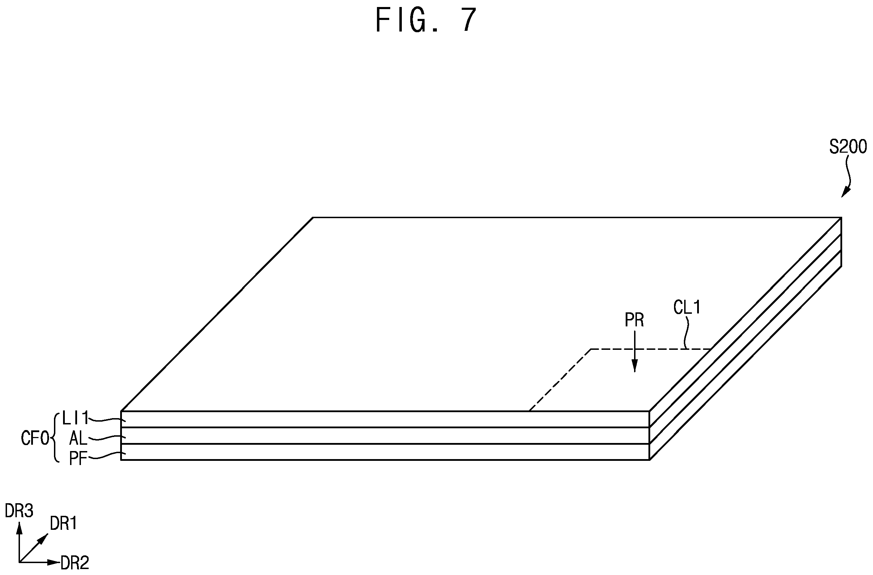

Referring to FIGS. 7, 8, 9, and 10, according to one or more embodiments, a portion (e.g., a first removal area RP1 and a second removal area RP2) of the first release paper LI1 may be kiss-cut along a first cutting line CL1 (S200). Therefore, a first portion PA1 of the adhesive layer, which overlaps the first removal area RP1 and the second removal area RP2, may be exposed to an outside.

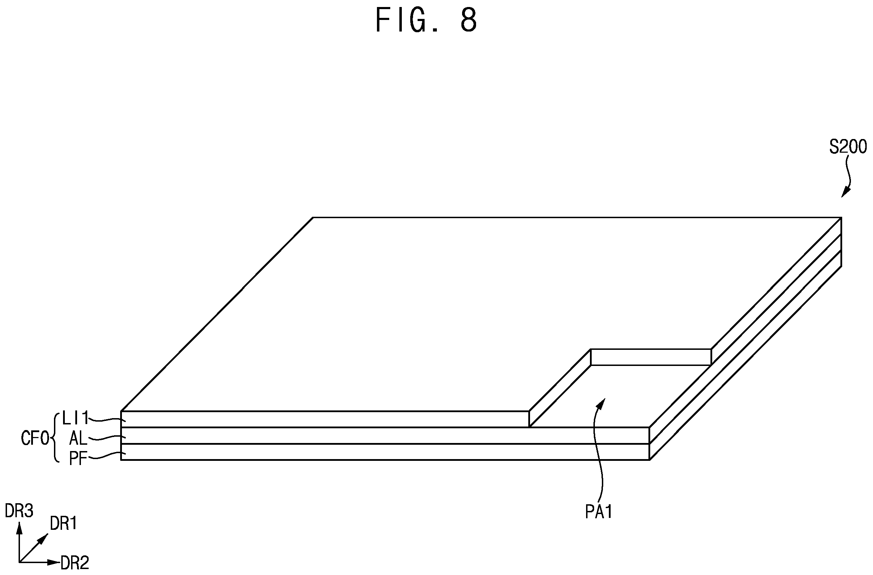

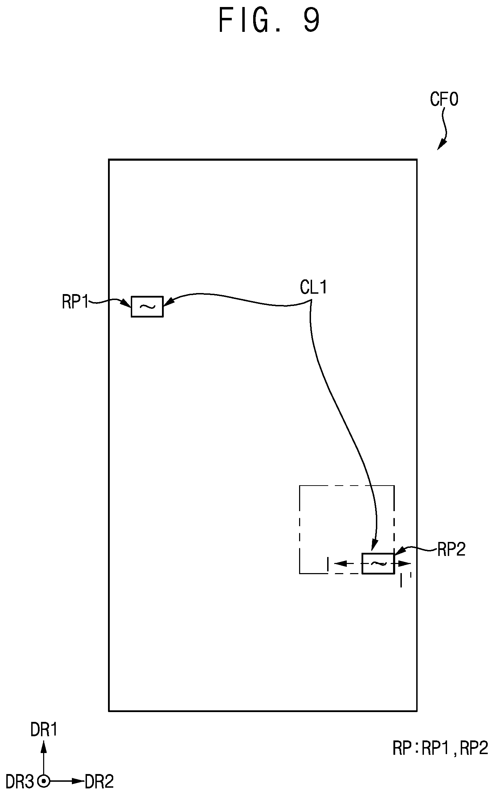

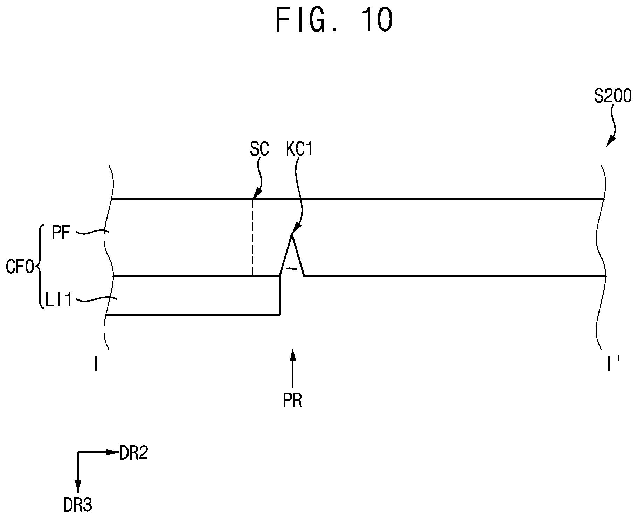

For example, FIGS. 7 and 8 are perspective views showing a portion including the second removal area RP2 (see a dash-dotted line of FIG. 9) in a plan view of FIG. 9. FIG. 10 is a sectional view taken along the line I-I' of FIG. 9.

For example, although two removal areas RP have been shown in FIG. 9 as being provided, the disclosure is not limited thereto. For example, one removal area RP or three or more removal areas RP may be provided.

A kiss-cut process (i.e., a demi-cut process) may refer to a process of cutting only one layer among two or more layers. The kiss-cut process may be distinguished from a full-cut process of cutting all of the two or more layers.

The kiss-cut process may also be distinguished from a half-cut process of removing only a portion of one layer (e.g., removing only a portion (e.g., half) of a thickness of the first release paper LI1 if (e.g., when) viewed in a section).

According to one or more embodiments, the kiss-cut process may be performed by a punching process. The kiss-cut process may be a process of punching the first release paper LI1 arranged on the protective film PF so as to facilitate peeling of the first release paper LI1 (the first release paper LI1 may also be referred to as a liner).

For example, the processing process (e.g., the punching process) may be performed by a press PR and a fixer. The press PR may apply a pressure to the preliminary film CF0 (punching) so as to remove the portion of the first release paper LI1. In this case, the fixer may fix the preliminary film CF0 so that the preliminary film CF0 may not be shaken (or moved during, e.g., the punching process).

Precision of the kiss-cut process may vary depending on a shape of a pressing surface of the press PR, distribution of a force due to stress concentration during the processing process (e.g., the punching process), precision of upward and downward movements of the press PR (i.e., movements in the third direction DR3 and a direction that is opposite to the third direction DR3), and/or the like.

For example, as shown in FIG. 10, the press PR may apply the pressure to the preliminary film CF0 (e.g., the first release paper LI1) (punching) so as to remove the portion of the first release paper LI1 to which the pressure is applied. Thereafter, a surface deformation caused by a manufacturing process (i.e., the processing process (e.g., the punching process)) may be generated on the protective film PF.

For example, according to one or more embodiments, after the portion of the first release paper LI1 is kiss-cut, the surface deformation (e.g., a first groove KC1) may be formed in the protective film PF in the direction that is opposite to the third direction DR3. The first groove KC1 may be a groove formed by a force applied by the press PR in the direction that is opposite to the third direction DR3. Accordingly, the first groove KC1 may have a pointed shape in a direction away from the adhesive layer (i.e., the direction that is opposite to the third direction DR3).

According to one or more embodiments, a surface of the first groove KC1 formed in the protective film PF may be smooth. For example, if (e.g., when) performing processing with a laser, carbonized foreign substances and/or the like may be found on a processing surface. In addition, the processing surface may be uneven due to heat caused by the laser. However, the carbonized foreign substances and/or the like may not be found on a processing surface of the first groove KC1 formed by performing pressing with a die or mold (i.e., formed by the processing process (e.g., the punching process)), and the processing surface may be smooth. That is, compared to the related art process that uses laser to form the first groove, the first groove formed using the press (e.g., by the punching process) according to one or more embodiments of the disclosure has a smooth surface, and without the carbonized foreign substances and/or the like, and/or the surface evenness.

However, the disclosure is not limited thereto. For example, a sectional shape of the first groove KC1 may vary depending on the shape of the pressing surface of the press PR, and/or the like.

The pressure used in forming the first groove KC1 may be suitably selected according to the desired depth of the first groove KC1. For example, if (e.g., when) the pressure is excessive as compared to a set or design value (excess-cut), a depth (a length in the third direction DR3) of the first groove KC1 may become larger. Accordingly, the protective film PF may be easily torn.

When the pressure is set to be less than the set or design value in order to minimize or reduce the depth of the first groove KC1, the first release paper LI1 may not be peeled off (no-cut).

The kiss-cut process may be additionally performed on the preliminary film CF0 determined as the no-cut (e.g., the depth of the cut is not sufficient). Therefore, the first groove KC1 may be found at a position overlapping the press PR in the preliminary film CF0 that has passed (e.g., undergone) the kiss-cut process. For example, the first groove KC1 may be found (e.g., detected) with an eye (e.g., visually), a camera, and/or the like.

Referring to FIGS. 8, 9, 11, and 12, according to one or more embodiments, a second release paper LI2 (e.g., release liner or release film) may be arranged on the adhesive layer AL (S300).

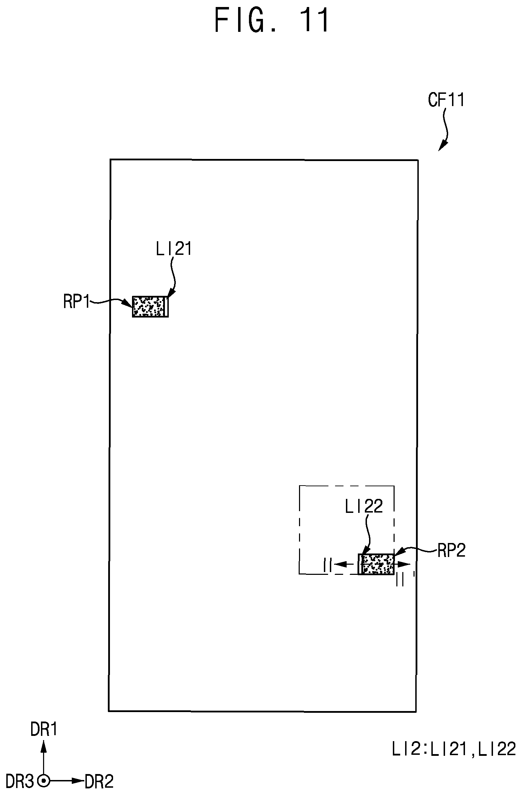

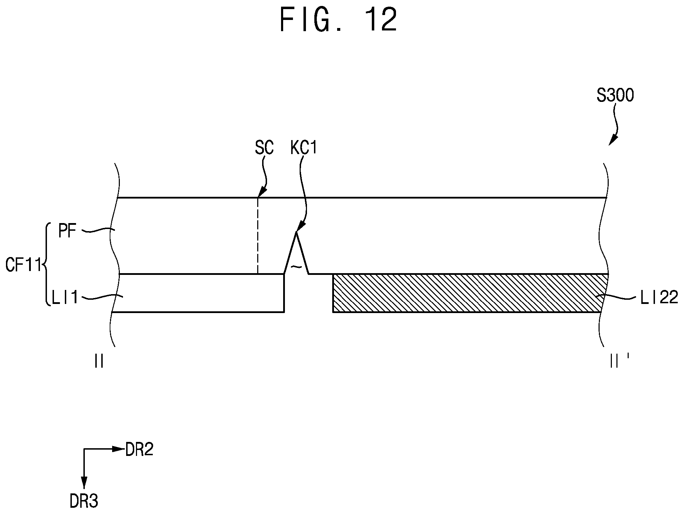

For example, FIG. 12 is a sectional view taken along the line II-II' of FIG. 11. After the first release paper LI1 is kiss-cut, a first portion (e.g., the first portion PA1 of FIG. 8) of the adhesive layer AL may be exposed to the outside. The second release paper LI2 may overlap the first portion PA1. For example, the second release paper LI2 may cover the adhesive layer AL exposed to the outside.

For example, the second release paper LI2 may serve to fix a pull-tab part that will be described in more detail so that the pull-tab part may not be easily separated (e.g., from the second release paper LI2).

According to one or more embodiments, the first release paper LI1 and the second release paper LI2 may be formed in different colors. For example, the first release paper LI1 may be transparent, and the second release paper LI2 may be black (the second release paper LI2 may also be referred to as a blocker). Accordingly, distinction of the second release paper LI2 may be enhanced. However, the disclosure is not limited thereto. The second release paper LI2 may be transparent or translucent. In addition, a second-first release paper LI21 and a second-second release paper LI22 may also be formed in different colors, or may be formed in substantially the same color.

For example, if (e.g., when) a primary processing cover film CF11 includes two removal areas RP1 and RP2, the primary processing cover film CF11 may include two second release papers LI21 and LI22. The second-first release paper LI21 may be arranged in the first removal area RP1. The second-second release paper LI22 may be arranged in the second removal area RP2. However, the disclosure is not limited thereto. The number of second release papers LI2 may vary depending on the number of removal areas RP.

Referring to FIGS. 9, 13, and 14, according to one or more embodiments, a portion of the second release paper LI2 may be kiss-cut along a second cutting line CL2 (S400).

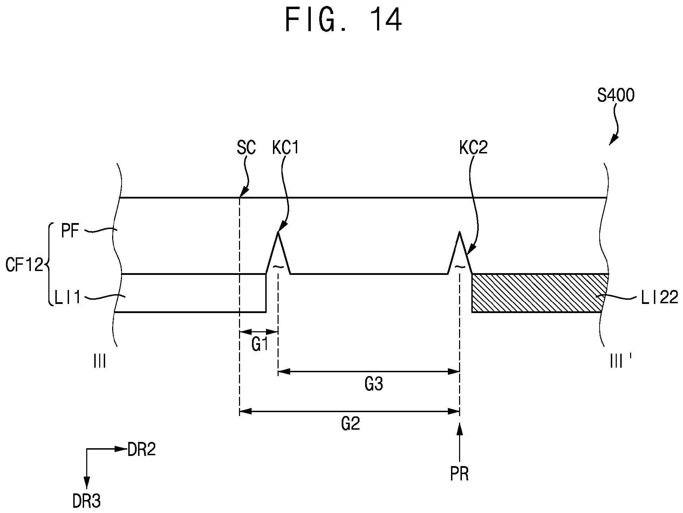

For example, FIG. 14 is a sectional view taken along the line III-III' of FIG. 13.

As described above, the kiss-cut process may be a process of cutting the second release paper LI2 (i.e., only one layer).

For example, the press PR may apply the pressure (punching) so as to remove the portion of the second release paper LI2 to which the pressure is applied. According to one or more embodiments, after the portion of the second release paper LI2 is removed, a second groove KC2 may be formed in the protective film PF.

According to one or more embodiments, the press PR may apply the force in the direction that is opposite to the third direction DR3 so that the second groove KC2 may have a pointed shape in the direction that is opposite to the third direction DR3. For example, if (e.g., when) viewed in a cross section, in a case where the press PR applies the force to the second release paper LI2, the second groove KC2 may have the pointed shape in a direction away from the adhesive layer AL. A processing surface of the second groove KC2 formed by the processing process (e.g., the punching process) may be smooth.

The pressure used in forming the second groove KC2 may be suitably selected according to the desired depth of the second groove KC2. For example, if (e.g., when) the pressure is excessive as compared to a set or design value (excess-cut), a depth of the second groove KC2 may become larger. Accordingly, the protective film PF may be easily torn. When the pressure is set to be less than the set or design value (no-cut) in order to minimize or reduce the depth of the second groove KC2, the portion of the second release paper LI2 may not be removed (e.g., it may be difficult to remove the portion of the second release paper LI2). The kiss-cut process may be additionally performed on a secondary processing cover film CF12 determined as the no-cut (e.g., the depth of the cut is not sufficient). Therefore, the first groove KC1 and the second groove KC2 may be found in the secondary processing cover film CF12 that has passed (e.g., undergone) the kiss-cut process.

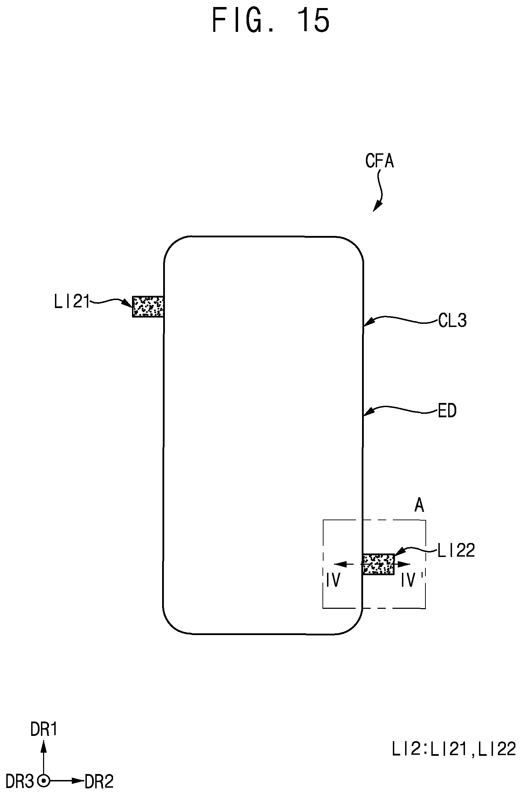

According to one or more embodiments, the second cutting line CL2 may be spaced and/or apart (e.g., spaced apart or separated) from both the first cutting line (see CL1 of FIG. 9) and a third cutting line (see CL3 of FIG. 15) that will be described in more detail. For example, according to one or more embodiments, if (e.g., when) viewed in the cross section, the first groove KC1 and the second groove KC2 may be spaced and/or apart (e.g., spaced apart or separated) from each other.

According to one or more embodiments, the second cutting line CL2 may be spaced and/or apart (e.g., spaced apart or separated) from the first cutting line CL1 by an amount that is greater than a processing tolerance. The first groove KC1 and the second groove KC2 may have a third gap G3. To this end, the press PR may be arranged such that the first cutting line CL1 of a first kiss-cut process S200 of FIG. 10 and the second cutting line CL2 of a second kiss-cut process S400 of FIG. 14 may have a set or predetermined interval (i.e., the third gap G3), and the processing process (e.g., the punching process) may be performed.

For example, the set or predetermined interval (i.e., the third gap G3) may be designed to reflect the processing tolerance of the press PR. For example, a slight error may occur in the processing process (e.g., the punching process). The processing tolerance may refer to a range of fluctuation (e.g., error) that may occur in the manufacturing process. For example, if (e.g., when) the processing tolerance is not considered, accuracy of the processing (e.g., the punching) may be reduced. Accordingly, the second release paper LI2 may not be cut, or may be cut at an incorrect position.

As described above, if (e.g., when) the portion of the second release paper LI2 is not removed, the kiss-cut process may be additionally performed, which may increase a tact time (e.g., processing time).

In a case where the processing (e.g., the punching) is performed at the incorrect position, the protective film PF may be torn if (e.g., when) the second release paper LI2 is peeled off.

The third gap G3 of the first groove KC1 and the second groove KC2 (e.g., the set or predetermined interval between the first cutting line CL1 and the second cutting line CL2) may be considered (or selected) so as to uniformly (e.g., substantially uniformly) and accurately remove the portion of the second release paper LI2. The third gap G3 of the first groove KC1 and the second groove KC2 may be variously set in consideration of a tolerance of the press PR and a thickness, characteristics, and/or the like of a processing target.

For example, if (e.g., when) the processing tolerance of the press PR is about 0.1 mm, the first cutting line CL1 and the second cutting line CL2 may be set to have the set or predetermined interval that exceeds about 0.1 mm. For example, the set or predetermined interval may be set to about 0.2 mm. Accordingly, even if (e.g., when) the processing tolerance (e.g., fluctuation) occurs, the portion of the second release paper LI2 may be removed more stably. However, the disclosure is not limited thereto. For example, the numerical value may vary depending on a size of the protection target, physical properties of the processing target, and/or the like.

For example, a pre-test may be conducted in order to set the set or predetermined interval. However, the disclosure is not limited thereto. For example, the set or predetermined interval may be modified in real time.

Referring to FIGS. 9, 13, 15, 16, and 17, according to one or more embodiments, the protective film PF and the adhesive layer AL may be full-cut in an outer edge shape ED of the protection target along a third cutting line CL3 spaced and/or apart (e.g., spaced apart or separated) from the first cutting line CL1 (S500). Accordingly, a cover film CFA according to one or more embodiments may be finished (S600).

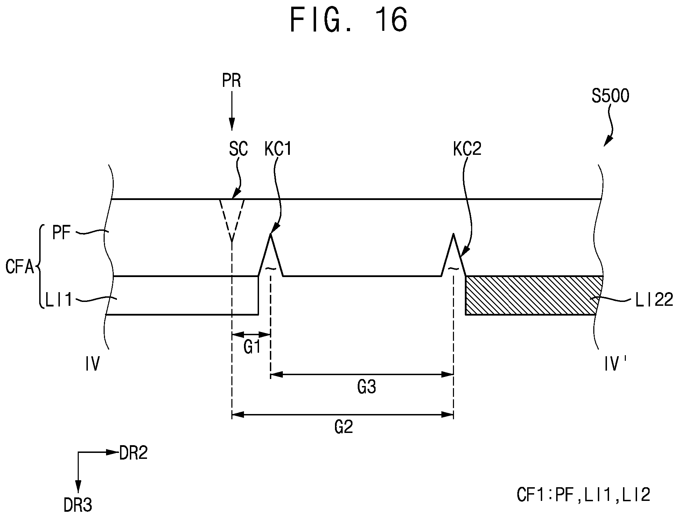

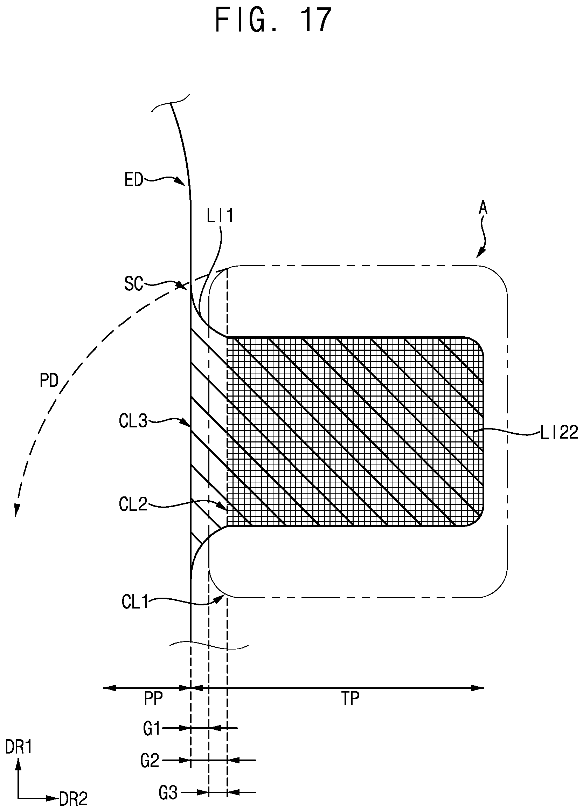

For example, FIG. 15 is a plan view showing a final shape of the cover film. FIG. 16 is a sectional view taken along the line IV-IV' of FIG. 15. FIG. 17 is an enlarged plan view for describing the area A of FIG. 15.

According to one or more embodiments, after the protective film PF and the adhesive layer AL are full-cut along the third cutting line CL3, if (e.g., when) viewed in the plane (e.g., in the plan view), the cover film CFA may include a protective part PP overlapping the outer edge shape ED of the protection target, a pull-tab part TP protruding from at least one side of the protective part PP (e.g., a part in which the second release paper LI2 including the second-first release paper LI21 and the second-second release paper LI22 is arranged), and a stress concentration part SC.

For example, the outer edge shape ED of the protection target (i.e., a final shape of the cover film CFA) may include a portion in which a curvature changes rapidly. Hereinafter, for convenience of description, the portion in which the curvature changes rapidly will also be referred to as a stress concentration part SC.

According to one or more embodiments, the stress concentration part SC may be a part in which the protective part PP and the pull-tab part TP are connected to each other. The stress concentration part SC may have geometric discontinuity. Accordingly, peeling stress may be concentrated in the stress concentration part SC if (e.g., when) the first release paper LI1 is peeled off from the protective film PF. For example, the final shape of the cover film CFA may be formed by performing the processing process (e.g., the punching process) on the protective film PF in the third direction DR3. An additional groove may be formed by the processing process (e.g., the punching process). The additional groove may have a pointed shape in the third direction DR3. In order to minimize or reduce the stress concentration, according to one or more embodiments, the first cutting line CL1 may be spaced and/or apart (e.g., spaced apart or separated) from the protective part PP while overlapping the pull-tab part TP. For example, the stress concentration part SC and the first groove KC1 may be spaced and/or apart (e.g., spaced apart or separated) from each other. For example, the processing process (e.g., the punching process) for forming the first groove KC1 may be performed at a position spaced and/or apart (e.g., spaced apart or separated) from the outer edge shape by a first gap G1. Because the stress concentration part SC and the first groove KC1 are spaced and/or apart (e.g., spaced apart or separated) from each other, weakening of tensile strength may be prevented or minimized or reduced if (e.g., when) the first release paper LI1 is peeled off.

According to one or more embodiments, the first groove KC1 and the second groove KC2 may be spaced and/or apart (e.g., spaced apart or separated) from each other. For example, the processing process (e.g., the punching process) for forming the second groove KC2 may be performed at a position spaced and/or apart (e.g., spaced apart or separated) from the first groove KC1 by the third gap G3. Because the first groove KC1 and the second groove KC2 are spaced and/or apart (e.g., spaced apart or separated) from each other, tearing and/or the like of the pull-tab part TP may be prevented or minimized or reduced if (e.g., when) the first release paper LI1 is peeled off. For example, the second groove KC2 may also be spaced and/or apart (e.g., spaced apart or separated) from the stress concentration part SC by a second gap G2, so that the weakening of the tensile strength may be prevented or minimized or reduced if (e.g., when) the first release paper LI1 is peeled off.

When viewed in the plane (e.g., in the plan view), the pull-tab part TP may protrude from at least one side of the protective part PP. For example, although the pull-tab part TP has been shown in the drawings (e.g., FIG. 17) as being formed only on one side, one cover film CF1 may include a plurality of pull-tab parts TP.

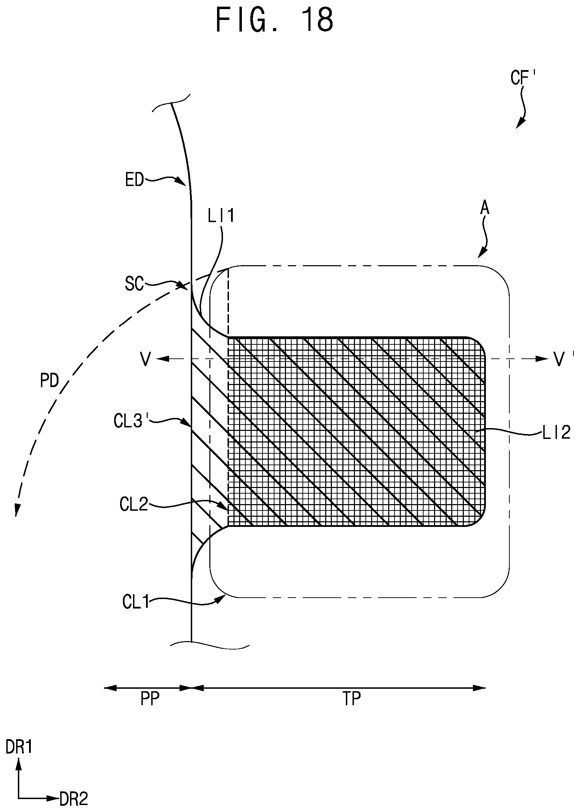

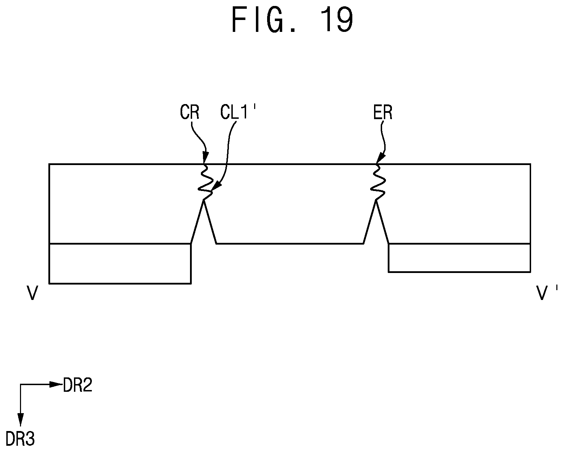

FIGS. 18 and 19 are views for describing effects of the disclosure.

For example, FIG. 18 is an enlarged plan view showing a cover film CF' according to a comparative example corresponding to a portion A of FIG. 17. FIG. 19 is a sectional view taken along the line V-V' of FIG. 18.

For example, in a case of a cover film according to a comparative example, the kiss-cut process may not be provided by replacing a release paper (e.g., the first release paper LI1). In this case, the cost of replacing the release paper and the time and additional resources for a compatibility test with an existing film may be invested (e.g., needed).

Referring to FIGS. 18 and 19, for example, in a case of a cover film CF' according to another comparative example, the first cutting line CL1 and a third cutting line CL3' may overlap each other. For example, a release paper (e.g., the first release paper LI1 of FIG. 16) may be punched so as to overlap the stress concentration part SC of the outer edge shape ED of the protection target. Accordingly, the stress concentration part SC and the first groove KC1 may overlap each other.

For example, if (e.g., when) the stress concentration part SC and the first groove KC1 overlap each other, consistency of an overlapping surface may be reduced. Accordingly, strength of the protective film PF may be weakened (e.g., in the overlapping area). Accordingly, if (e.g., when) the release paper is peeled off, a force may not be distributed, and tensile strength (e.g., in the overlapping area) may be weaker than tensile strength of other regions, so that the protective film PF may be easily torn.

The tensile strength may refer to strength of an object to withstand pulling if (e.g., when) the object is pulled. For example, a force obtained by measuring how strongly the protective film PF may withstand pulling until the protective film PF is torn if (e.g., when) a gripper included in a peeling equipment pulls the release paper may be defined as the tensile strength of the protective film PF. For example, as the tensile strength of the protective film PF becomes smaller (e.g., lower), the protective film PF may be torn more easily in a peeling direction PD.

In a case where the protective film PF is torn, if (e.g., when) a torn portion is caught in the equipment, the torn portion may damage the equipment. Accordingly, production efficiency may be reduced, and additional costs may be incurred. In addition, if (e.g., when) the torn portion is visually recognized, an outward appearance of a product may be damaged, which may reduce user satisfaction. Also, the torn portion may not protect the protection target (e.g., a protective film with a torn portion may not effectively protect the protection target).

In addition, if the processing process (e.g., the punching process) is performed without setting a degree by which the first cutting line CL1 and the second cutting line CL2 are spaced and/or apart (e.g., spaced apart or separated) from each other, the punching may be performed at a position that is not designed according to the processing tolerance.

In addition, if the processing process (e.g., the punching process) is performed without setting a degree by which the first cutting line CL1 and the second cutting line CL2 are spaced and/or apart (e.g., spaced apart or separated) from each other, the first cutting line CL1 and the second cutting line CL2 may overlap each other. In this case, the first groove KC1 caused by the first cutting line CL1 and the second groove KC2 caused by the second cutting line CL2 may overlap each other. As described above, if (e.g., when) the first groove KC1 and the second groove KC2 overlap each other, the strength of the protective film PF may be weakened. Accordingly, if (e.g., when) the release paper (e.g., the first release paper LI1) is peeled off, the force may not be distributed, and the tensile strength may be weaker than the tensile strength of other regions, so that the protective film PF and/or the pull-tab part TP may be easily torn. For example, if (e.g., when) cutting is performed along a first cutting line CL1', a tear CR may occur in the protective part PP, or a tear ER may occur in the pull-tab part in the punching process for attaching the second release paper (the blocker).

However, as shown in FIGS. 16 and 17, in the case of the cover film according to one or more embodiments of the disclosure (e.g., the cover film CFA of FIG. 16), the first release paper LI1 may not be replaced. Accordingly, the replacement cost of the release paper, and the time and the additional resources for the compatibility test with the existing film may be saved.

According to one or more embodiments, the first cutting line CL1, the second cutting line CL2, and the third cutting line CL3 may be spaced and/or apart (e.g., spaced apart or separated) from each other.

The first release paper LI1 may be punched so as not to overlap the stress concentration part SC of the outer edge shape ED of the protection target. Accordingly, the stress concentration part SC and the first groove KC1 may be spaced and/or apart (e.g., spaced apart or separated) from each other by the first gap G1. For example, because the stress concentration part SC and the first groove KC1 are spaced and/or apart (e.g., spaced apart or separated) from each other, the strength and durability of the protective film PF may be increased. Accordingly, a cover film CFA with improved reliability, which is prevented or substantially prevented from being torn and/or the like, may be provided.

In addition, the degree by which the first cutting line CL1 and the second cutting line CL2 are spaced and/or apart (e.g., spaced apart or separated) from each other may be set. For example, the first groove KC1 caused by the first cutting line CL1 and the second groove KC2 caused by the second cutting line CL2 may be spaced and/or apart (e.g., spaced apart or separated) from each other by the third gap G3. As described above, the third gap G3 may be set to be greater than the processing tolerance. Accordingly, accuracy of the processing process (e.g., the punching process) may be further improved. In addition, because the first cutting line CL1 and the second cutting line CL2 are spaced and/or apart (e.g., spaced apart or separated) from each other, if (e.g., when) the release paper (e.g., the first release paper LI1) is peeled off, the tearing of the protective film PF and/or the pull-tab part TP may be prevented or minimized or reduced.

In addition, the second cutting line CL2 and the third cutting line CL3 may also be spaced and/or apart (e.g., spaced apart or separated) from each other. For example, the second groove KC2 may be spaced and/or apart (e.g., spaced apart or separated) from the stress concentration part SC by the second gap G2. Accordingly, the tearing of the protective film PF may be further prevented or reduced.

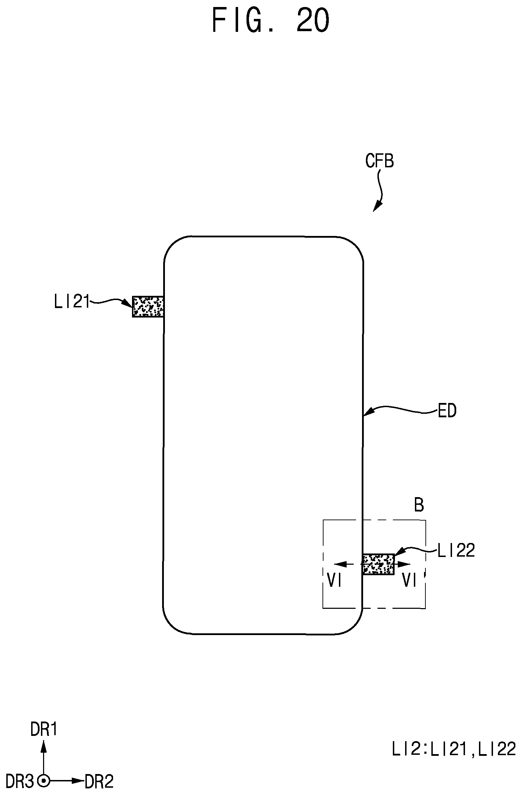

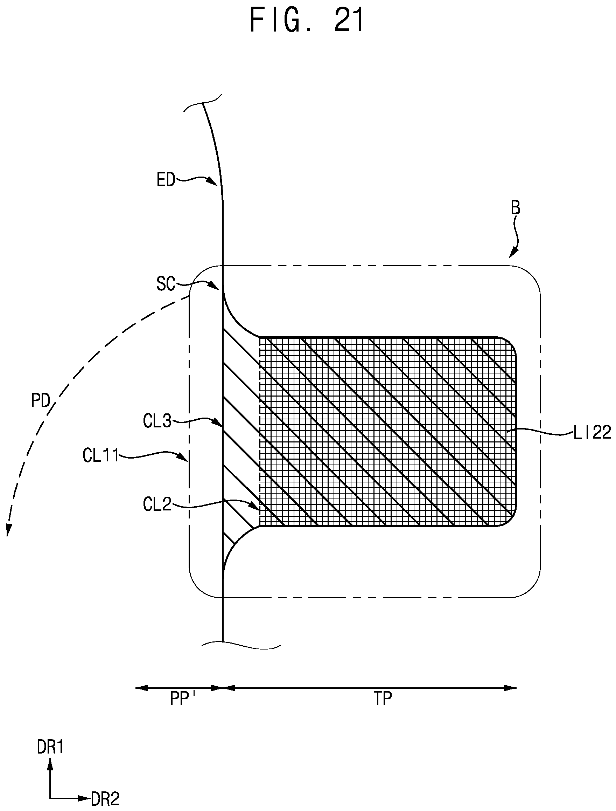

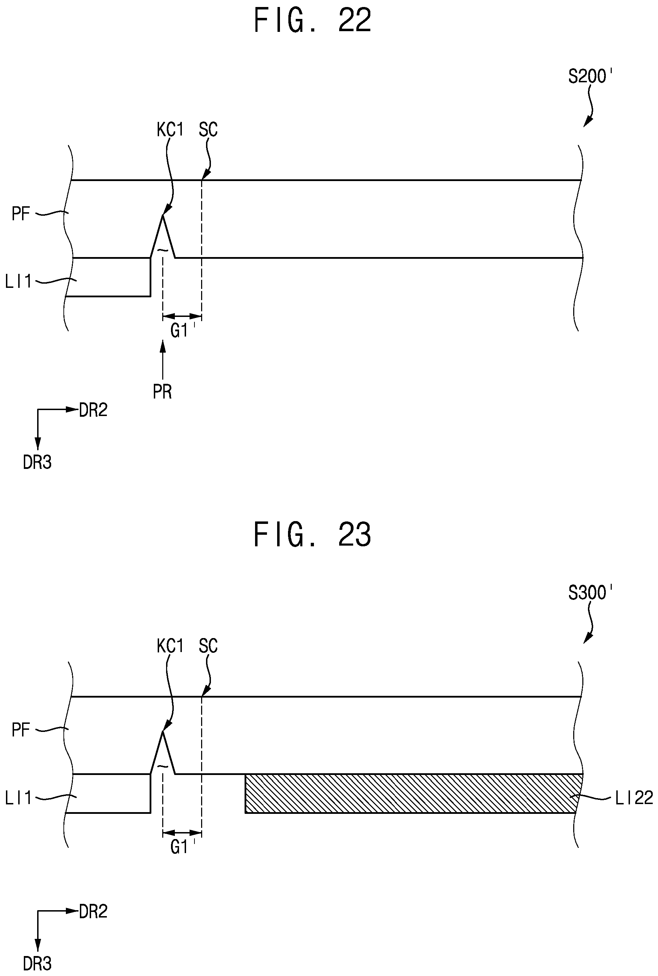

FIG. 20 is a perspective view for describing a cover film according to one or more embodiments of the disclosure. FIG. 21 is an enlarged plan view showing a portion B of FIG. 20. FIGS. 22, 23, 24, and 25 are views for describing a method of manufacturing the cover film of FIG. 20.

Hereinafter, for convenience of description, redundant descriptions corresponding to the cover film CFA described above with reference to FIGS. 1 to 19 will not be provided or simplified.

For example, the cover film CFA of FIGS. 5 to 17 may be different from a cover film CFB of FIGS. 20 to 25 in that the first cutting line CL1 does not overlap the protective part PP in the cover film CFA of FIGS. 5 to 17, whereas a portion of a first cutting line CL11 overlaps a protective part PP' in the cover film CFB of FIGS. 20 to 25. Accordingly, while a kiss-cut line (corresponding to the first groove KC1) caused by the first cutting line CL1 does not overlap the protective part PP in FIG. 16, a portion of a kiss-cut line of FIG. 20 may overlap the protective part PP'. However, the cover film CFB of FIGS. 20 to 25 may be substantially identical/similar to the cover film CFA of FIGS. 5 to 17 in that, in the cover film CFB of FIGS. 20 to 25, kiss-cut lines (e.g., a first groove KC1 and a second groove KC2) do not overlap each other, and full-cutting (e.g., a third cutting line CL3 and a stress concentration part SC defined by the third cutting line CL3) is performed while being spaced and/or apart (e.g., spaced apart or separated) from the kiss-cut lines (e.g., the first groove KC1 and the second groove KC2).

Referring to FIGS. 5, 6, 7, 20, and 21, according to one or more embodiments, the cover film CFB may include a protective film PF, an adhesive layer AL, and a first release paper LI1.

According to one or more embodiments, the protective film PF, the adhesive layer AL, and the first release paper LI1 may be parallel to a plane defined by the first direction DR1 and the second direction DR2. The protective film PF, the adhesive layer AL, and the first release paper LI1 may be sequentially arranged in the third direction DR3.

The protective film PF may be arranged on the protection target. The adhesive layer AL may allow the first release paper LI1 to adhere to the protective film PF. After the first release paper LI1 is removed, the adhesive layer AL may allow the protective film PF to adhere to the protection target. However, because the above configuration has been provided for illustrative purposes, the cover film CFB may further include one or more suitable layers, or some of the components may not be provided/replaced.

Similar to FIGS. 5 and 6, a preliminary film CF0 may be formed by sequentially arranging an adhesive layer AL and a first release paper LI1 on a protective film PF (S100).

Referring to FIGS. 21 and 22, according to one or more embodiments, a portion of the first release paper LI1 may be kiss-cut along a first cutting line CL11 (S200'). Accordingly, a portion of the adhesive layer (e.g., the adhesive layer AL of FIG. 5), which overlaps the portion of the first release paper LI1 that is removed, may be exposed to an outside. According to one or more embodiments, a portion of the first cutting line CL11 may overlap the protective part PP'.

According to one or more embodiments, the kiss-cutting may be performed by a punching process. The kiss-cut process may be a process of punching the first release paper LI1 arranged on the protective film PF so as to facilitate peeling of the first release paper LI1.

According to one or more embodiments, after the portion of the first release paper LI1 is kiss-cut, the surface deformation (e.g., a first groove KC1) may be formed in the protective film PF in the third direction DR3. The first groove KC1 may be a groove formed by a force applied by the press PR in the direction that is opposite to the third direction DR3. Accordingly, the first groove KC1 may have a pointed shape in a direction away from the adhesive layer (i.e., the direction that is opposite to the third direction DR3).

According to one or more embodiments, a surface of the first groove KC1 formed in the protective film PF may be smooth. For example, if (e.g., when) performing processing with a laser, carbonized foreign substances and/or the like may be found on a processing surface. In addition, the processing surface may be uneven due to heat caused by the laser. However, the carbonized foreign substances and/or the like may not be found on a processing surface of the first groove KC1 formed by performing pressing with a die or mold (i.e., formed by the processing process (e.g., the punching process)), and the processing surface may be smooth. That is, compared to the related art process that uses laser to form the first groove, the first groove formed using the press (e.g., by the punching process) according to one or more embodiments of the disclosure has a smooth surface, and without the carbonized foreign substances and/or the like, and/or the surface evenness.

The first groove KC1 may be found at a position overlapping the press PR in the cover film that has passed (e.g., undergone) the kiss-cut process. For example, the first groove KC1 may be found (e.g., detected) with an eye (e.g., visually), a camera, and/or the like.

Referring to FIGS. 20, 21, and 23, according to one or more embodiments, a second release paper (e.g., release liner or release film) (LI2 of FIG. 20 and LI22 of FIG. 23) may be arranged on the adhesive layer exposed to an outside (S300').

For example, the second release paper LI2 may cover the adhesive layer AL exposed to the outside. According to one or more embodiments, the first release paper LI1 and the second release paper LI2 may be formed in different colors. For example, the first release paper LI1 may be transparent, and the second release paper LI2 may be black. However, the disclosure is not limited thereto.

Referring to FIGS. 20, 21, and 24, according to one or more embodiments, a portion of the second release paper LI2 may be kiss-cut along a second cutting line CL2 (S400').

For example, similar to the first groove KC1, if (e.g., when) the press PR applies a force in the direction that is opposite to the third direction DR3, the second groove KC2 may also have a pointed shape in the direction that is opposite to the third direction DR3. For example, according to one or more embodiments, after the portion of the second release paper LI2 is kiss-cut, the second groove KC2 may be formed in the protective film PF in the direction that is opposite to the third direction DR3.

The pressure used in forming the second groove KC2 may be suitably selected according to the desired depth of the second groove KC2. For example, if (e.g., when) the pressure is excessive as compared to a set or design value (excess-cut), a depth of the second groove KC2 may become larger. Accordingly, the protective film PF may be easily torn. If (e.g., when) the pressure is set to be less than the set or design value (no-cut) in order to minimize or reduce the depth of the second groove KC2, the portion of the second release paper LI2 may not be removed (e.g., it may be difficult to remove the portion of the second release paper LI2). The kiss-cut process may be additionally performed on a processing target determined as the no-cut (e.g., the depth of the cut is not sufficient). Therefore, the first groove KC1 and the second groove KC2 may be found in the cover film that has passed the kiss-cut process.

According to one or more embodiments, the second cutting line CL2 may be spaced and/or apart (e.g., spaced apart or separated) from both (e.g., simultaneously) the first cutting line CL11 and a third cutting line CL3. For example, according to one or more embodiments, if (e.g., when) viewed in the section, the first groove KC1 and the second groove KC2 may be spaced and/or apart (e.g., spaced apart or separated) from each other.

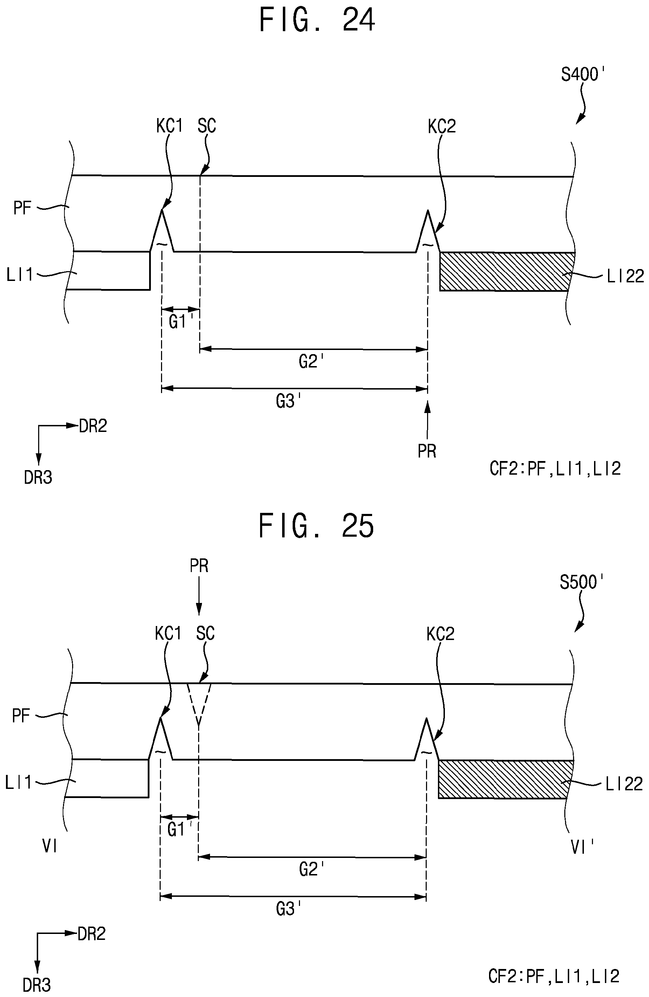

According to one or more embodiments, the second cutting line CL2 may be spaced and/or apart (e.g., spaced apart or separated) from the first cutting line CL11 by an amount that is greater than a processing tolerance. The first groove KC1 and the second groove KC2 may have a third gap G3'. To this end, the press PR may be arranged such that the first cutting line CL11 (corresponding to the first groove KC1) of a first kiss-cut process S200' of FIG. 22 and the second cutting line CL2 (corresponding to the second groove KC2) of a second kiss-cut process S400' of FIG. 24 may have a set or predetermined interval (i.e., the third gap G3'), and the processing process (e.g., the punching process) may be performed.

For example, the set or predetermined interval (i.e., the third gap G3') may be designed to reflect the processing tolerance of the press PR. For example, a slight error may occur in the processing process (e.g., the punching process). The processing tolerance may refer to a range of fluctuation (e.g., error) that may occur in the manufacturing process. For example, if (e.g., when) the processing tolerance is not considered, accuracy of the processing (e.g., the punching) may be reduced. Accordingly, the second release paper LI2 may not be cut, or may be cut at an incorrect position. As described above, if (e.g., when) the portion of the second release paper LI2 is not removed, the kiss-cut process may be additionally performed, which may increase a tact time e.g., processing time). In a case where the processing (e.g., the punching) is performed at the incorrect position, the protective film PF may be torn if (e.g., when) the second release paper LI2 is peeled off.

The third gap G3' of the first groove KC1 and the second groove KC2 (e.g., the set or predetermined interval between the first cutting line CL11 and the second cutting line CL2) may be considered so as to uniformly (e.g., substantially uniformly) and accurately remove the portion of the second release paper LI2. The third gap G3' of the first groove KC1 and the second groove KC2 may be variously set in consideration of a tolerance of the press PR and a thickness, characteristics, and/or the like of the processing target.

Similar to FIGS. 13, 14, and 15, referring to FIGS. 20, 21, and 25, according to one or more embodiments, the protective film PF and the adhesive layer AL may be full-cut in an outer edge shape ED of the protection target along a third cutting line CL3 spaced and/or apart (e.g., spaced apart or separated) from the first cutting line CL11 (S500'). Accordingly, a cover film CFB of FIG. 20 may be finished.

According to one or more embodiments, after the protective film PF and the adhesive layer AL are full-cut along the third cutting line CL3, if (e.g., when) viewed in the plane (e.g., in a plan view), the cover film CFB may include a protective part PP' overlapping the outer edge shape ED of the protection target, a pull-tab part TP protruding from at least one side of the protective part PP', and a stress concentration part SC.

For example, the outer edge shape ED of the protection target may include a portion in which a curvature changes rapidly. The portion in which the curvature changes rapidly may also be referred to as a stress concentration part SC. According to one or more embodiments, the stress concentration part SC may be a part in which the protective part PP' and the pull-tab part TP are connected to each other. The stress concentration part SC may have geometric discontinuity. Accordingly, peeling stress may be concentrated in the stress concentration part SC if (e.g., when) the first release paper LI1 is peeled off from the protective film PF.

In order to minimize or reduce the stress concentration, according to one or more embodiments, the first cutting line CL11 may be spaced and/or apart (e.g., spaced apart or separated) from the protective part PP' while overlapping the pull-tab part TP. For example, the stress concentration part SC and the first groove KC1 may be spaced and/or apart (e.g., spaced apart or separated) from each other. For example, the processing process (e.g., the punching process) for forming the first groove KC1 may be performed at a position spaced and/or apart (e.g., spaced apart or separated) from the outer edge shape by a first gap G1'. Because the stress concentration part SC and the first groove KC1 are spaced and/or apart (e.g., spaced apart or separated) from each other, weakening of tensile strength may be prevented or minimized or reduced if (e.g., when) the first release paper LI1 is peeled off.

According to one or more embodiments, the first groove KC1 and the second groove KC2 may be spaced and/or apart (e.g., spaced apart or separated) from each other. For example, the processing process (e.g., the punching process) for forming the second groove KC2 may be performed at a position spaced and/or apart (e.g., spaced apart or separated) from the first groove KC1 by the third gap G3'. Because the first groove KC1 and the second groove KC2 are spaced and/or apart (e.g., spaced apart or separated) from each other, tearing and/or the like of the pull-tab part TP may be prevented or minimized or reduced if (e.g., when) the first release paper LI1 is peeled off.

According to one or more embodiments, the first release paper LI1 may be kiss-cut while being spaced and/or apart (e.g., spaced apart or separated) from the part in which the protective part PP' and the pull-tab part TP are connected to each other (i.e., the stress concentration part SC). According to one or more embodiments, the first cutting line CL11 may partially overlap the protective part PP'.

In the case of the cover film according to one or more embodiments of the disclosure (e.g., the cover film CFA of FIG. 15 or the cover film CFB of FIG. 20), the first release paper LI1 may not be replaced. Accordingly, the replacement cost of the release paper, and the time and the additional resources for the compatibility test with the existing film may be saved.

According to one or more embodiments, the first cutting line CL11, the second cutting line CL2, and the third cutting line CL3 may be spaced and/or apart (e.g., spaced apart or separated) from each other.

The first release paper LI1 may be punched so as not to overlap the stress concentration part SC of the outer edge shape ED of the protection target. Accordingly, the stress concentration part SC and the first groove KC1 may be spaced and/or apart (e.g., spaced apart or separated) from each other. For example, because the stress concentration part SC and the first groove KC1 are spaced and/or apart (e.g., spaced apart or separated) from each other, the strength and durability of the protective film PF may be increased. Accordingly, a cover film CFB with improved reliability, which is prevented or substantially prevented from being torn and/or the like, may be provided.

In addition, the degree by which the first cutting line CL11 and the second cutting line CL2 are spaced and/or apart (e.g., spaced apart or separated) from each other may be set. For example, the first groove KC1 caused by the first cutting line CL11 and the second groove KC2 caused by the second cutting line CL2 may be spaced and/or apart (e.g., spaced apart or separated) from each other by the third gap G3'. As described above, the third gap G3' may be set to be greater than the processing tolerance. Accordingly, accuracy of the processing process (e.g., the punching process) may be further improved. In addition, because the first cutting line CL11 and the second cutting line CL2 are spaced and/or apart (e.g., spaced apart or separated) from each other, if (e.g., when) the release paper (e.g., the first release paper LI1) is peeled off, the tearing of the protective film PF and/or the pull-tab part TP may be prevented or minimized or reduced.

In addition, the second cutting line CL2 and the third cutting line CL3 may also be spaced and/or apart (e.g., spaced apart or separated) from each other. For example, the second groove KC2 may be spaced and/or apart (e.g., spaced apart or separated) from the stress concentration part SC by the second gap G2'. Accordingly, the tearing of the protective film PF may be further prevented or reduced.

In addition, the first cutting line CL11 and the third cutting line CL3 may also be spaced and/or apart (e.g., spaced apart or separated) from each other. For example, the stress concentration part SC may be spaced and/or apart (e.g., spaced apart or separated) from the first groove KC1 by the first gap G1'. Accordingly, the tearing of the protective film PF may be further prevented or reduced.

When the final shape of the cover film (CFA of FIG. 15 and CFB of FIG. 20) is formed, an additional groove having a pointed shape in the third direction DR3 may be formed. The first groove KC1 and the second groove KC2 may be spaced and/or apart (e.g., spaced apart or separated) from the additional groove, so that a cover film (CFA of FIG. 15 and CFB of FIG. 20) with improved reliability may be provided.

A cover film and a method of manufacturing the cover film according to the example embodiments of the disclosure may be applied to the process of manufacturing a display device included in a computer, a laptop, a mobile phone, a smartphone, a smart pad, a PMP, a PDA, an MP3 player, and/or the like.

In the accompanying drawings, the dimensions of each structure may be exaggerated for clarity of the present disclosure. It will be understood that, although the terms "first," "second," *etc.,* may be used herein to describe various components, these components should not be limited by these terms. These terms are only used to distinguish one component from another. For example, a first component could be termed a second component, and, similarly, a second component could be termed a first component, without departing from the scope of example embodiments of the present disclosure. As used herein, the singular forms, "a," "an," and "the" are intended to include the plural forms as well, unless the context clearly indicates otherwise.

In the present application, it will be understood that the terms "include," "have" and/or the like specify the presence of features, numbers, steps, operations, components, parts, or combinations thereof disclosed in the specification, but do not exclude the possibility of presence or addition of one or more other features, numbers, steps, operations, components, parts, or combinations thereof.

In addition, it will be understood that when an element such as a layer, film, region, or substrate is referred to as being "on" another element, it can be directly on the other element or intervening elements may also be present.

The use of "may" when describing embodiments of the present disclosure refers to "one or more embodiments of the present disclosure". As used herein, the term "and/or" includes any and all combinations of one or more of the associated listed items.

As used herein, the terms "substantially", "about", and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The electronic apparatus, the display device, a manufacturing device of the electronic apparatus and/or the display device, and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the above has been explained with reference to one or more embodiments of the disclosure, it will be understood that a person with ordinary knowledge in the field of technology may modify and change the disclosure in one or more suitable ways within the scope of the ideas and areas of the disclosure, as defined by the claims, and equivalents thereof.

## Claims

1. A method of manufacturing a cover film (CLA) comprising:
sequentially arranging (S100), on a protective film (PF) that is parallel to a plane defined by a first direction (DR1) and a second direction (DR2) crossing the first direction (DR1), an adhesive layer (AL) and a first release liner (LI1) in a third direction (DR3) crossing the first direction (DR1) and the second direction (DR2);
kiss-cutting (S200) a portion (RP1, RP2) of the first release liner (LI1) along a first cutting line (CL1) and removing the portion (RP1, RP2) of the first release liner (LI1) along the first cutting line (CL1) to expose a portion (PA1) of the adhesive layer (AL);
arranging (S300) a second release liner (LI2) on the portion (PA1) of the adhesive layer (AL); and
full-cutting (S500) the protective film (PF) and the adhesive layer (AL) in an outer edge shape (ED) of a protection target (DD) along a third cutting line (CL3) spaced from the first cutting line (CL1).

2. The method of claim 1, wherein, after the full-cutting of the protective film (PF) and the adhesive layer (AL) along the third cutting line (CL3), in a plan view,
the cover film (CLA) comprises:
a protective part (PP) overlapping the outer edge shape (ED) of the protection target (DD);
a pull-tab part (TP) protruding from at least one side of the protective part (PP);
and a stress concentration part (SC),
wherein the stress concentration part (SC) is a part in which the protective part (PP) and the pull-tab part (TP) are connected to each other, and
wherein peeling stress is concentrated at the stress concentration part (SC) when the first release liner (LI1) is peeled off from the protective film (PF).

3. The method of claim 2, wherein the first cutting line (CL1) is spaced from the stress concentration part (SC).

4. The method of any one of the preceding claims, further comprising:
after the arranging of the second release liner (LI2) on the portion (PA1) of the adhesive layer (AL), kiss-cutting (S400) a portion of the second release liner (LI2) along a second cutting line (CL2).

5. The method of claim 4, wherein the second cutting line (CL2) is spaced from both the first cutting line (CL1) and the third cutting line (CL3).

6. The method of claim 5, wherein the second cutting line (CL2) is spaced from the first cutting line (CL1) by an amount that is greater than a processing tolerance.

7. The method of any one of claims 4 to 6, wherein, after the kiss-cutting of the portion (RP1, RP2) of the first release liner (LI1), a first groove (KC1) is formed in the third direction (DR3) on the protective film (PF),
after the kiss-cutting of the portion of the second release liner (LI2), a second groove (KC2) is formed in the third direction (DR3) on the protective film (PF), and,
in a cross-sectional view, the first groove (KC1) and the second groove (KC2) are spaced from each other.

8. The method of claim 1, wherein, after the full-cutting of the protective film (PF) and the adhesive layer (AL), in a plan view, the cover film (CLA) comprises a protective part (PP) overlapping the outer edge shape (ED) of the protection target (DD) and a pull-tab part (TP) protruding from at least one side of the protective part (PP), and
the first cutting line (CL1) is spaced from the protective part (PP) while overlapping the pull-tab part (TP).

9. The method of claim 1, wherein, after the full-cutting of the protective film (PF) and the adhesive layer (AL), in a plan view, the cover film (CLA) comprises a protective part (PP) overlapping the outer edge shape (ED) of the protection target (DD) and a pull-tab part (TP) protruding from at least one side of the protective part (PP), and
a portion of the first cutting line (CL1) overlaps the protective part (PP).

10. The method of any one of the preceding claims, wherein the first release liner (LI1) and the second release liner (LI2) are in different colors.

11. The method of any one of the preceding claims, wherein the kiss-cutting is performed by a punching process.

12. A cover film (CLA) comprising:
a first release liner (LI1) having a surface that is parallel to a plane defined by a first direction (DR1) and a second direction (DR2) crossing the first direction (DR1);
an adhesive layer (AL) on the first release liner (LI1); and
a protective film (PF) on the adhesive layer (AL), the protective film (PF) comprising a first groove (KC1) and a second groove (KC2), both the first and second grooves (KC2) extending in a thickness direction that is parallel to a third direction (DR3) crossing the first direction (DR1) and the second direction (DR2),
wherein the first groove (KC1) and the second groove (KC2) are spaced from each other.

13. The cover film (CLA) of claim 12, wherein, in a plan view, the cover film (CLA) comprises:
a protective part (PP) overlapping an outer edge shape (ED) of a protection target (DD);
a pull-tab part (TP) protruding from at least one side of the protective part (PP); and
a stress concentration part (SC) where the protective part (PP) and the pull-tab part (TP) are connected,
wherein peeling stress is concentrated at the stress concentration part (SC) when the first release liner (LI1) is peeled off from the protective film (PF), and the first groove (KC1) is spaced from the stress concentration part (SC).

14. The cover film (CLA) of any one of claims 12 or 13, wherein, in a cross-sectional view, each of the first groove (KC1) and the second groove (KC2) has a pointed shape in a direction away from the adhesive layer (AL).

15. The cover film (CLA) of any one of claims 12 to 14, wherein, in the cross-sectional view, each of the first groove (KC1) and the second groove (KC2) has a smooth surface.

16. An electronic device (EA) comprising:
a protection target (DD);
a cover film (CLA) on the protection target (DD), the cover film (CLA) comprising:
a protective film (PF) on the protection target (DD),
the protective film (PF) comprising a first groove (KC1) and a second groove (KC2), both the first and second grooves (KC2) extending in a thickness direction that is parallel to a third direction (DR3) crossing the first direction (DR1) and the second direction (DR2),
wherein the first groove (KC1) and the second groove (KC2) are spaced from each other; and
an adhesive layer (AL) for adhering the protective film (PF) to the protection target (DD).

17. The electronic device (EA) of claim 16, wherein the cover film (CLA) further comprises:
a first release liner (LI1) on the adhesive layer (AL), which is peeled off before adhering the cover film (CLA) to the protection target (DD),
wherein, in a plan view, the cover film (CLA) comprises:
a protective part (PP) overlapping an outer edge shape (ED) of the protection target (DD);
a pull-tab part (TP) protruding from at least one side of the protective part (PP); and
a stress concentration part (SC) where the protective part (PP) and the pull-tab part (TP) are connected, and
wherein peeling stress is concentrated at the stress concentration part (SC) when the first release liner (LI1) is peeled off from the adhesive layer (AL), and the first groove (KC1) is spaced from the stress concentration part (SC).

18. The electronic device (EA) of any one of claims 16 or 17, wherein, in a cross-sectional view, each of the first groove (KC1) and the second groove (KC2) has a pointed shape in a direction away from the adhesive layer (AL).

19. The electronic device (EA) of any one of claims 16 to 18, wherein, in the cross-sectional view, each of the first groove (KC1) and the second groove (KC2) has a smooth surface.

20. The electronic device (EA) of any one of claims 16 to 19, wherein the protection target (DD) comprises:
a display module (DM) comprising a plurality of pixels (PX); and
an exterior case (EDC) accommodating the display module (DM), and
wherein the protection target (DD) is selected from among an electronic device for displaying an image, a wearable electronic device, and an electronic device for a vehicle, each comprising the display module (DM).
